# EUROPEAN PATENT APPLICATION

(11) **EP 2 169 521 A1**
(43) Date of publication of application: **31.03.2010**
(21) Application number: 08165295.0
(22) Date of filing: 26.09.2008
(51) Int. Cl.: G06F 3/048

(54) **Touch-screen device having soft escape key**

(71) Applicant: Research In Motion Limited, Waterloo, Ontario N2L 3W8 (CA)
(72) Inventor: Rider, Douglas Clayton, Ottawa Ontario K2J 2M5 (CA); Dolbec, Jean, Carp Ontario K0A 1L0 (CA); Yerxa, Barry Fraser, Ottawa Ontario K1G 2B3 (CA)
(74) Representative: Patel, Binesh

(57) **Abstract**

A touch-screen device has a processor operatively coupled to a memory for storing and executing an application, and a touch-sensitive display screen for receiving a touch input for triggering a displaying of an escape key on the display screen. The displaying of the escape key can be triggered by touching the screen for a predetermined period of time, by swiping a stylus over the screen or by any other recognizable gesture. This soft escape key can thus be used to close, or escape from, an application.

## Description

The present technology relates generally to touch-screen devices and, more particularly, to handheld electronic devices having touch screens.

Touch-screen devices are becoming increasingly popular on various types of mobile devices, including, for example, wireless communications devices, smartphones, personal digital assistants (PDAs), palmtops, tablets, GPS navigation units, MP3 players, and other handheld electronic devices.

A touch-screen device is any computing device that has a touch-sensitive display that detects the location of touches (from a finger or stylus) on the display screen and converts these touches into user input for controlling software applications running on the device or for controlling other functionalities of the device. This technology therefore enables the display to be used as a user input device, rendering redundant the keyboard or keypad that would conventionally be used as the primary user input device for manipulating and interacting with the content displayed on the display screen.

A variety of touch-screen technologies are now known in the art, for example resistive, surface acoustic wave, capacitive, infrared, strain gauge, optical imaging, dispersive signal technology, acoustic pulse recognition, frustrated total internal reflection, and diffused laser imaging.

Irrespective of the specific touch-screen technology that is used, onscreen ergonomics remain an important consideration in ensuring a favourable user experience. In particular, the ability to manipulate applications on a touch-screen device is an area where further improvements would be desirable.

### GENERAL

In general, the present technology may provide a novel technique for triggering the displaying of an escape key (or back key) on a touch-sensitive display of a touch-screen device when an open application is to be closed.
When an application is to be closed, the touch-sensitive display is touched to cause the escape key to appear onscreen. The escape key is then touched or "tapped" in order to complete the request to close the application.

Thus, an aspect of the present technology may be a method of closing an open application or window on a touch-screen device. The method may comprise steps of receiving a touch input on a touch-sensitive display of the touch-screen device, and in response to the touch input, displaying on the touch-sensitive display an escape icon that can be tapped to cause the device to close the open application executing on the device.

In one implementation of this aspect of the technology, the step of receiving the touch input may comprise touching the touch-sensitive display in a substantially fixed location on the display for a period of time that exceeds a predetermined time threshold as a precondition for triggering the step of displaying the escape icon.

In another implementation of this aspect of the technology, the step of receiving the touch input on the touch-sensitive display may comprise receiving a stylus swipe that traverses a length of the touch-sensitive display exceeding a predetermined length as a precondition for triggering the step of displaying the escape icon.

In yet another implementation of this aspect of the technology, the step of receiving the touch input on the touch-sensitive display may comprise receiving a user-predefined gesture on the screen as a precondition for triggering the step of displaying the escape icon.

Another aspect of the present technology may be a computer program product that includes code adapted to perform the steps of any of the foregoing methods when the computer program product is loaded into memory and executed on a processor of a wireless communications device. Various versions of this computer program product can be coded to perform the various implementations of the novel method described above.

Yet another aspect of the present technology may be a touch-screen device, such as a handheld electronic device, comprising a processor operatively coupled to a memory for storing and executing an application, and a touch-sensitive display screen for receiving a touch input for triggering a displaying of an escape key on the display screen.

In one implementation of this aspect of the technology, the escape key may be displayed only after the touch-sensitive display screen has been touched for a period of time exceeding a predetermined time threshold.

In another implementation of this aspect of the technology, the escape key may be displayed only after the touch-sensitive display screen has been touched by swiping a stylus across a portion of the screen that exceeds a predetermined threshold.

In yet another implementation of this aspect of the technology, the escape key may be displayed only after the touch-sensitive display screen has been touched by applying a predefined customized gesture to the screen.

### BRIEF DESCRIPTION OF THE DRAWINGS

Further features and advantages of the present technology will become apparent from the following detailed description, taken in combination with the appended drawings, in which:

FIG. 1 is a schematic depiction of a handheld electronic device as one example of a touch-screen device upon which the present technology can be implemented;

FIG. 2 is a flowchart outlining some of the main steps of a method of closing an open application on a touch-screen device in accordance with one or more implementations of the present technology;

FIG. 3 is a schematic depiction of a touch-screen device having an open MP3 application as an example of an open application for which there is no defined exit or escape button;

FIG. 4 is a schematic depiction of how a user can touch the touch-screen device of FIG. 3 in order to trigger the appearance of an escape key;

FIG. 5 is a schematic depiction of the touch-screen device of FIG. 3, illustrating the soft escape key displayed on the screen, the escape key being represented in this particular example by an X icon;

FIG. 6 is a schematic depiction of the touch-screen device of FIG. 3, showing how the user taps the X icon in order to cause the application to close;

FIG. 7 is a schematic depiction of the touch-screen device of FIG. 6 after the MP3 application has closed, leaving the playlist application open;

FIG. 8 is a schematic depiction of the touch-screen device of FIG. 7, illustrating how a user can again touch the touch-sensitive screen to provoke the appearance of another soft escape key;

FIG. 9 is a schematic depiction of the touch-screen device of FIG. 8, illustrating how another X icon (representing a soft escape key) is displayed on the screen;

FIG. 10 is a schematic depiction of the touch-screen device of FIG. 9, illustrating how the user can close the playlist application by tapping the X icon;

FIG. 11 is a schematic depiction of the touch-screen device of FIG. 10 after the playlist application has been closed, leaving behind the main menu;

FIG. 12 schematically depicts a diagonal swiping motion that can be used to trigger the appearance of the soft escape key in accordance with another implementation of this technology;

FIG. 13 schematically depicts how a user can trace out an X onscreen as a customized predefined gesture that can be used to trigger the appearance of the soft escape key in accordance with another implementation of this technology;

FIG. 14 schematically depicts how a user can trace out a Z onscreen as a customized predefined gesture that can be used to trigger the appearance of the soft escape key in accordance with another implementation of this technology; and

FIG. 15 schematically depicts how a user can perform a circular gesture for triggering the appearance of the soft escape key in accordance with another implementation of this technology.

It will be noted that throughout the appended drawings, like features are identified by like reference numerals.

### DESCRIPTION OF PREFERRED EMBODIMENTS

In general, the present technology provides a novel technique for triggering the displaying of an escape key (or back key) on a touch-sensitive display of a touch-screen device when an open application is to be closed. When an application is to be closed, the touch-sensitive display is touched to cause the escape key to appear onscreen. The escape key is then touched or "tapped" in order to complete the request to close the application.

This escape key or back key is referred to herein as a soft escape key or a soft back key, respectively, because it has no hardware implementation as a key on the keypad or keyboard or other physical input device but is rather merely represented onscreen as a touch-sensitive button, icon or other visual element, such as, for example, a small box with a back arrow or a small box with an X.

The displaying of the escape key (or back key) can be triggered in different ways, for example, by touching the screen in substantially the same spot for a period of time exceeding a predetermined time threshold, by performing a swiping movement over the screen using a stylus or finger, by performing a predefined gesture (that can be customized by the user or system administrator), or by performing any other recognizable gesture or combination of touches that signals to the device that it should now display the soft escape key onscreen. The soft escape key can optionally be made to automatically disappear if the escape key is not touched within a predetermined period of time.

Thus, a main aspect of the present technology is a method of closing an open application or window on a touch-screen device. The method comprises steps of receiving a touch input on a touch-sensitive display of the touch-screen device, and in response to the touch input, displaying on the touch-sensitive display an escape icon that can be tapped to cause the device to close the open application executing on the device.

In one implementation of this aspect of the technology, the step of receiving the touch input comprises touching the touch-sensitive display in a substantially fixed location on the display for a period of time that exceeds a predetermined time threshold as a precondition for triggering the step of displaying the escape icon.

In another implementation of this aspect of the technology, the step of receiving the touch input on the touch-sensitive display comprises receiving a stylus swipe that traverses a length of the touch-sensitive display exceeding a predetermined length as a precondition for triggering the step of displaying the escape icon.

In yet another implementation of this aspect of the technology, the step of receiving the touch input on the touch-sensitive display comprises receiving a user-predefined gesture on the screen as a precondition for triggering the step of displaying the escape icon.

Another main aspect of the present technology is a computer program product that includes code adapted to perform the steps of any of the foregoing methods when the computer program product is loaded into memory and executed on a processor of a wireless communications device. Various versions of this computer program product can be coded to perform the various implementations of the novel method described above.

Yet another main aspect of the present technology is a touch-screen device, such as a handheld electronic device, comprising a processor operatively coupled to a memory for storing and executing an application, and a touch-sensitive display screen for receiving a touch input for triggering a displaying of an escape key on the display screen.

In one implementation of this aspect of the technology, the escape key is displayed only after the touch-sensitive display screen has been touched for a period of time exceeding a predetermined time threshold.

In another implementation of this aspect of the technology, the escape key is displayed only after the touch-sensitive display screen has been touched by swiping a stylus across a portion of the screen that exceeds a predetermined threshold.

In yet another implementation of this aspect of the technology, the escape key is displayed only after the touch-sensitive display screen has been touched by applying a predefined customized gesture to the screen.

The details and particulars of these aspects of the technology will now be described below, by way of example, with reference to the attached drawings.

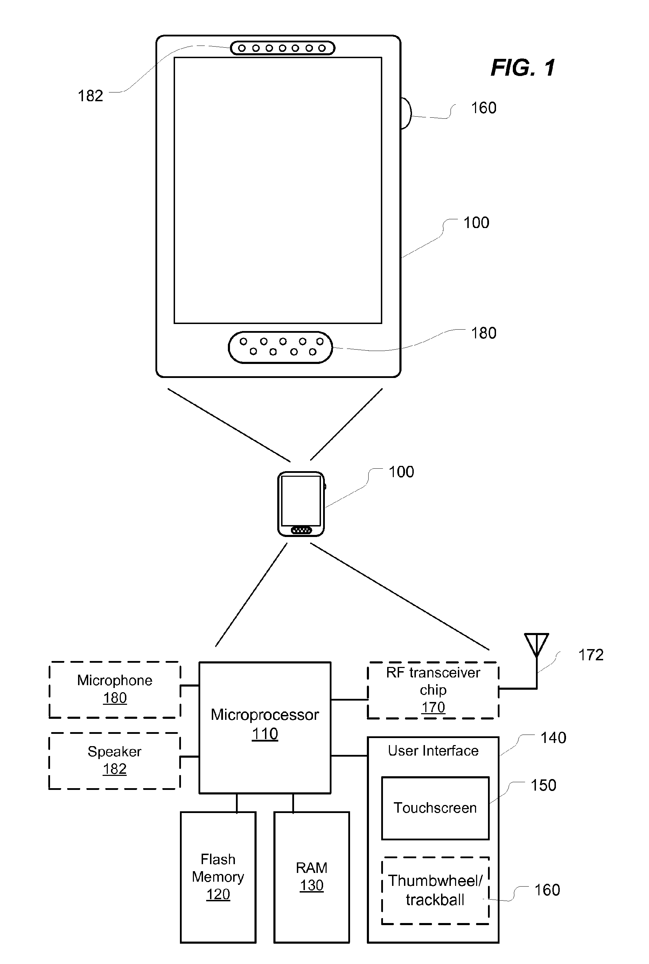

FIG. 1 is a schematic depiction of a handheld electronic device as one example of a touch-screen device upon which the present technology can be implemented.

For the purposes of this specification, the expression "touch-screen device" is meant to encompass a broad range of portable, handheld or mobile electronic devices such as smart phones, cell phones, satellite phones, wireless-enabled PDAs or wireless-enabled Pocket PCs or tablets, and any other wireless communications device that is capable of exchanging data over a radiofrequency channel or wireless link, tablets, laptops, PDAs, MP3 players, GPS navigation units, etc., or any hybrid or multifunction device. The expression "touch-screen device" is also meant to include any fixed or stationary (non-portable) devices such as desktop computers or workstations having touch-sensitive screens, as well as kiosks or terminals, such as information kiosks or automated teller machines that utilize touch screens.

As shown in FIG. 1, the touch-screen device, designated generally by reference numeral 100, includes a processor (or microprocessor) 110, memory in the form of flash memory 120 and/or RAM 130, and a user interface 140. The user interface is touch-sensitive. This touch-sensitive user interface 140 includes a touch screen 150 and may also include an optional trackball or thumbwheel (or scroll wheel) 160. Where the touch-screen device is a wireless communications device, the device 100 would further include a radiofrequency transceiver chip 170 and antenna 172.
Where the device is a voice-enabled wireless communications device, such as, for example, a smartphone or cell phone, the device would further include a microphone 180 and a speaker 182. It bears emphasizing, however, that the present technology can be implemented on any touch-screen device, even if the device is not wireless enabled.

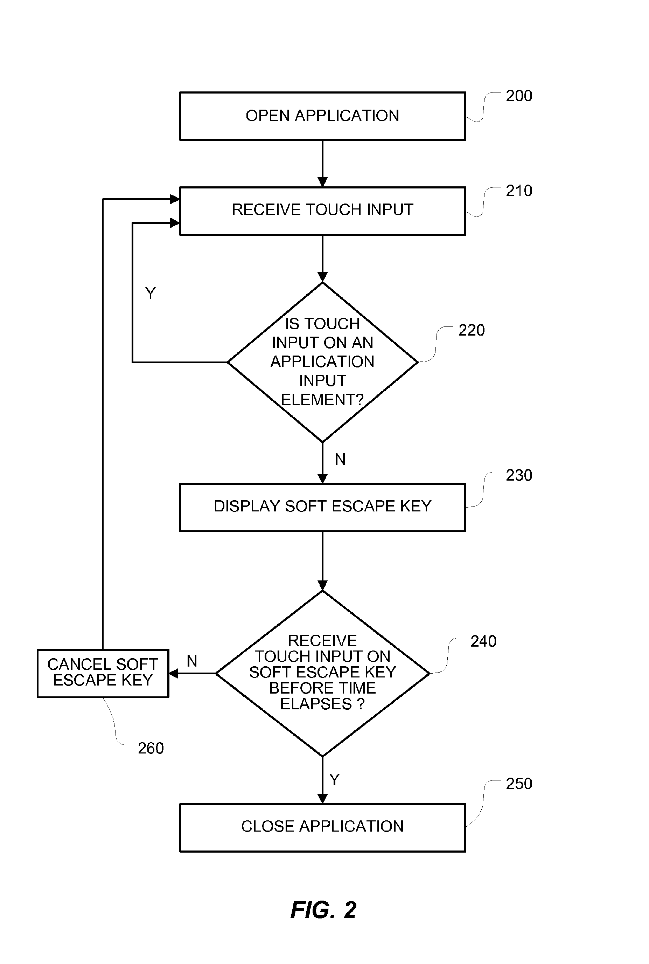

FIG. 2 is a flowchart outlining some of the main steps of a method of closing an open application on a touch-screen device in accordance with one or more implementations of the present technology. As depicted in FIG. 2, after an initial step 200 of opening an application on the device, the device awaits touch input on the touch-sensitive screen 150 shown in FIG. 1. In some implementations, when touch input is received at step 210, the device decides at step 220 whether this touch input is on an application input element or not. An application input element is any onscreen button, menu, icon or other visual element the touching of which is treated as user input. If a user of the device touches an area onscreen that is covered by one of these application input elements, then the user input is used for activating the application feature that is associated with that application input element. (In this case, operations cycle back to step 210 to await further user input). If, on the other hand, the touch input is on an area of the screen that is not covered by an application input element, then the touch input is treated as a potential trigger for triggering the appearance onscreen of a soft escape key. This is a potential trigger because there may be a further criterion (such as, for example, touching the screen for a minimum period of time) before the escape key is displayed (to minimize unwanted displaying of the escape key due to inadvertent or *de minimis* contact with the screen. Therefore, to trigger the displaying onscreen of the soft escape key, the user (with his finger, thumb or stylus) touches an area of the screen that is not associated with an application input element. In other words, the user touches what is conventionally the inactive or "dead" portion of the touch-screen. For the purposes of this specification, this inactive portion of the screen shall be referred to as the backdrop. Thus, depending on the application and the particular window that is open, every screen will be divisible into application input elements (active portions) and backdrop. In other words, any part of the screen that is not covered by an application input element is considered the backdrop. By touching the backdrop, the user can trigger the appearance of the soft escape key (or soft back key). This is shown at step 230. In another variant, the device can be configured to trigger the appearance of the soft escape key when the user performs a recognizable gesture on the screen even if, in so doing, the user touches an "active" element. In other words, in this particular implementation, if the recognizable gesture is performed onscreen, the touching of one or more active elements only causes the soft escape key to materialize onscreen and does not cause any application top launch or application feature to be triggered or selected by the touching of the respective active elements (as would ordinarily be the case when active elements are touched).

As an optional feature, the escape key can be made to linger only for a predetermined period of time. With this option, if the escape key is not touched within the allotted time, then the escape key disappears. Step 260 shows the cancellation of the soft escape key as operations cycle back to step 210 to await further user input. Accordingly, step 260 is a step of causing the escape key to disappear after a predetermined period of time has elapsed without the escape key being touched.

On the other hand, as shown in FIG. 2, if the escape key is tapped (i.e. touched) before the predetermined time elapses, then the application is closed at step 250. This time window, as will be appreciated, is optional. Thus, in another implementation, the escape key can remain open indefinitely until it is tapped. In another implementation, to cancel the escape key, the user can touch an area of the screen outside of the escape key (by, for example, touching the backdrop).

It should be understood from the foregoing disclosure that, in certain implementations, the touching of the screen does not per se trigger the appearance of the soft escape key. In other words, in some cases, a further action, event, condition or criterion (i.e. a further "co-trigger") is required or must be satisfied to cause the escape key to be displayed onscreen. For example, this further action, event, condition, or criterion ("co-trigger") can be a time-based or temporal criterion. For example, the device can be configured so that the touch input on the touch-sensitive display must occur in a substantially fixed location on the display for a period of time that exceeds a predetermined time threshold in order to trigger the appearance onscreen of the soft escape key. In this example, a "touch and hold" for a given period of time is a precondition for triggering the step of displaying the escape icon. For example, a time period of between 0.25 and 0.60 seconds has been found to provide good ergonomics; however, it should be appreciated that any suitable time period can be utilized. Thus, in one implementation, the method of displaying the soft escape key involves receiving touch input on the device for a predetermined time that exceeds a predetermined temporal threshold. In this particular implementation, any ephemeral touch input that does not endure for more than the predetermined temporal threshold is dismissed (i.e. not acted on) by the device as a stray gesture or unintended input. As will be appreciated, other conditions, criteria or events can be defined as "co-triggers" to preclude displaying the soft escape key in cases that are likely to be stray gestures or unintended input.

As noted above, in most implementations, the trigger that causes the appearance of the escape key is the touching of the touch-sensitive display screen in an area of the screen that is not an application input element, i.e. not a button, menu, icon or other input element that enables the user to provide input to the application that is currently open and active on the device. As noted above, in most implementations, if the user touches an application input element, then the input is registered in the usual manner for the application that is open and active. If the user touches the backdrop portion of the touch-sensitive screen, i.e. an inactive area of the screen, this will trigger the displaying of the soft escape key (or exit button). In a variant on this, however, it is possible to define one or more specific areas of the screen that must be touched in order to trigger the appearance of the soft escape key. For example, the screen may have predefined target areas, such as the upper right corner or the upper left corner that must be touched to trigger the appearance of the soft escape key irrespective whether there are other inactive areas of backdrop available onscreen.

From the foregoing, it should be apparent that most implementations require touching of the backdrop. However, in a different implementation, the touching (and holding) on an application input element can also be a trigger to cause the appearance onscreen of the soft escape key, not just the touching of the backdrop. In this alternative implementation, the tap gesture (touch with quick release) is distinguished from the touch and hold gesture. In this alternative implementation, tapping will invoke the application input element whereas touching and holding will not affect the application input element, but will bring up the escape key. In this case, the gesture that invokes the escape key (touch and hold) is unique on the input element, thus making it recognizable by the device for the purposes of triggering the appearance of the soft escape key.

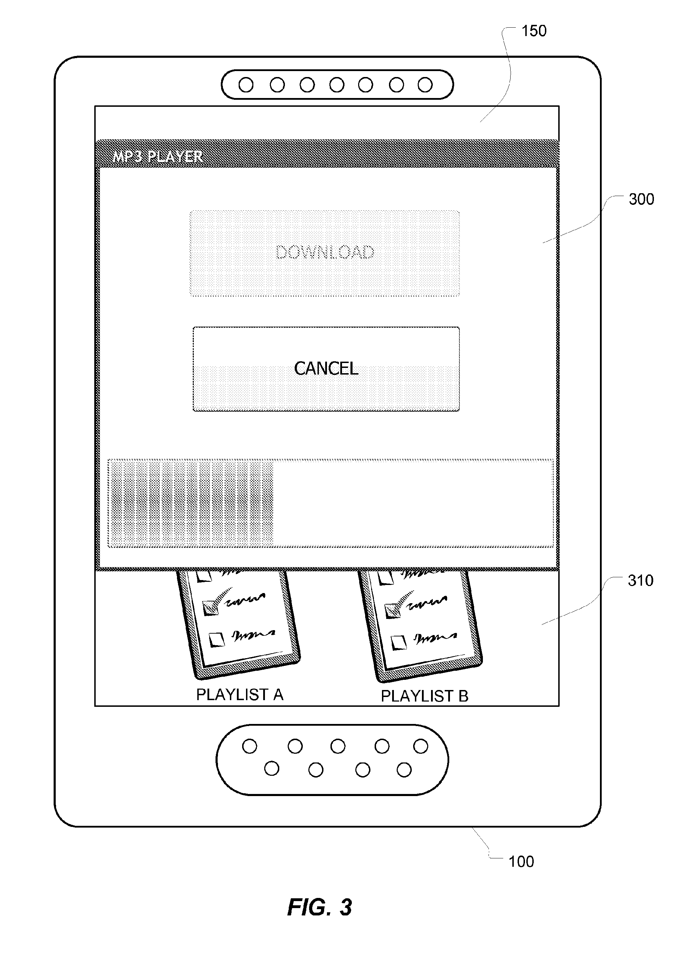

FIGS. 3 to 15 illustrate, by way of example, further features and attributes of this novel technology.

FIG. 3 is a schematic depiction of a touch-screen device 100 having an open MP3 application 300 as an example of an open application for which there is no defined onscreen exit (no existing escape button). In this particular example, the MP3 application is layered over top of a playlist application 310.

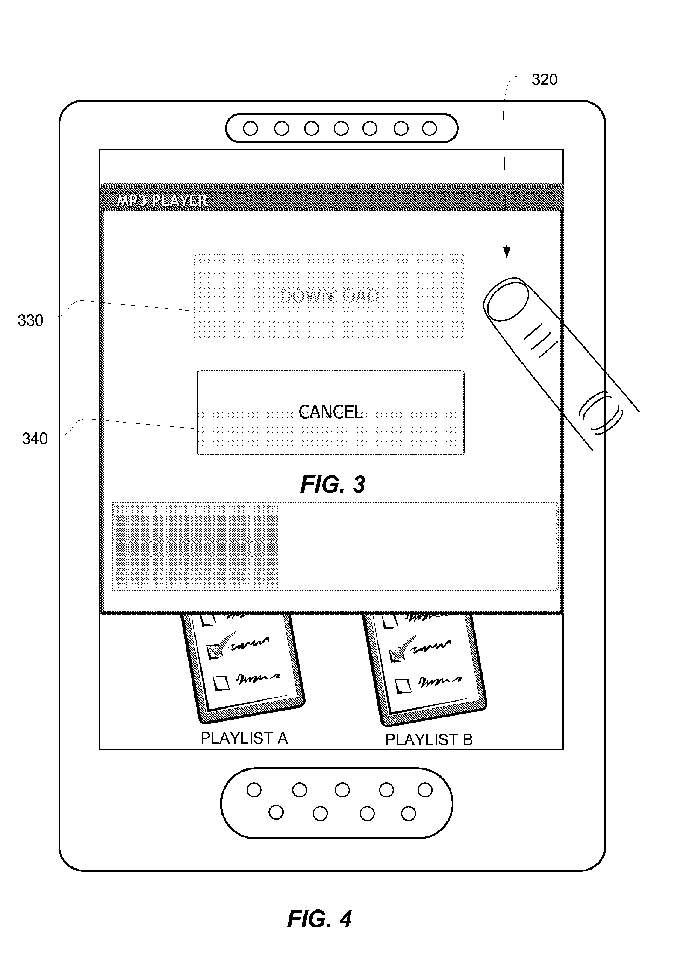

To escape from the MP3 application 300, the user (using his finger, as shown in FIG. 4, or alternatively a stylus) touches the backdrop 320 of the touch-sensitive screen. As shown in FIG. 4, the backdrop 320 is all the portions of the screen that are not associated with, or covered by, application input elements such as the DOWNLOAD and CANCEL buttons 330, 340, respectively. In a variant, the greyed-out DOWNLOAD button 330 (which is shown in FIG. 4 as being inactive) can be considered part of the backdrop 320. Whether inactive application input elements (such as greyed-out button 330) is considered part of the backdrop 320 can be configured by the user or system administrator on an options or preferences page (not shown).

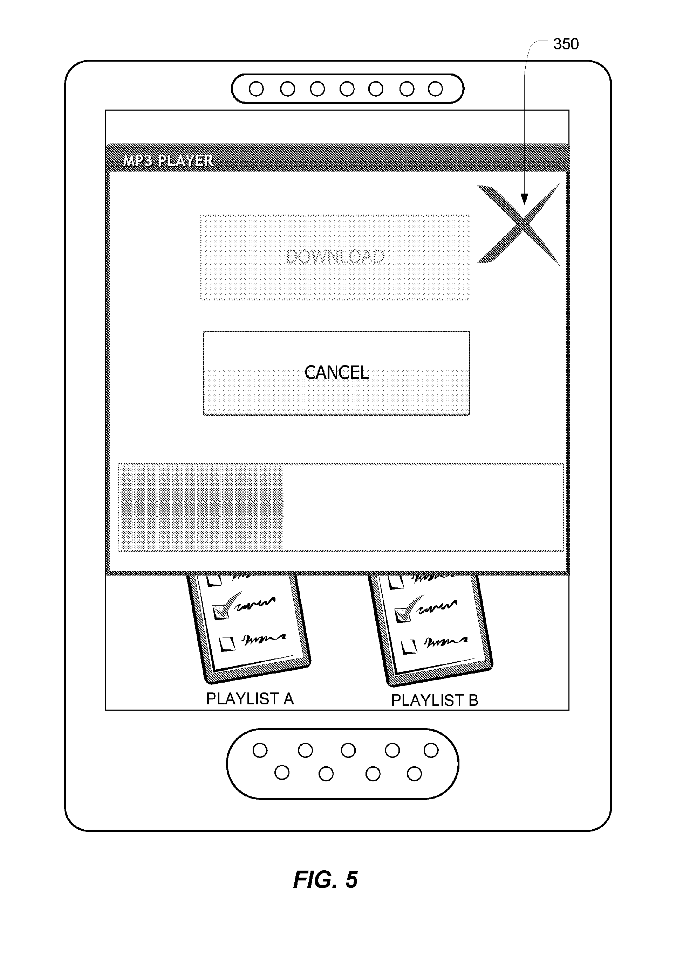

FIG. 5 is a schematic depiction of the touch-screen device 100 of FIG. 3, illustrating the soft escape key 350 displayed on the touch-sensitive screen 150. In this particular example, the escape key 350 is represented by an X icon. In lieu of an X icon, as shown in these figures, the soft escape key can be a curved arrow, or any other symbol, word or icon that represents the closing of, or exiting from, an application.

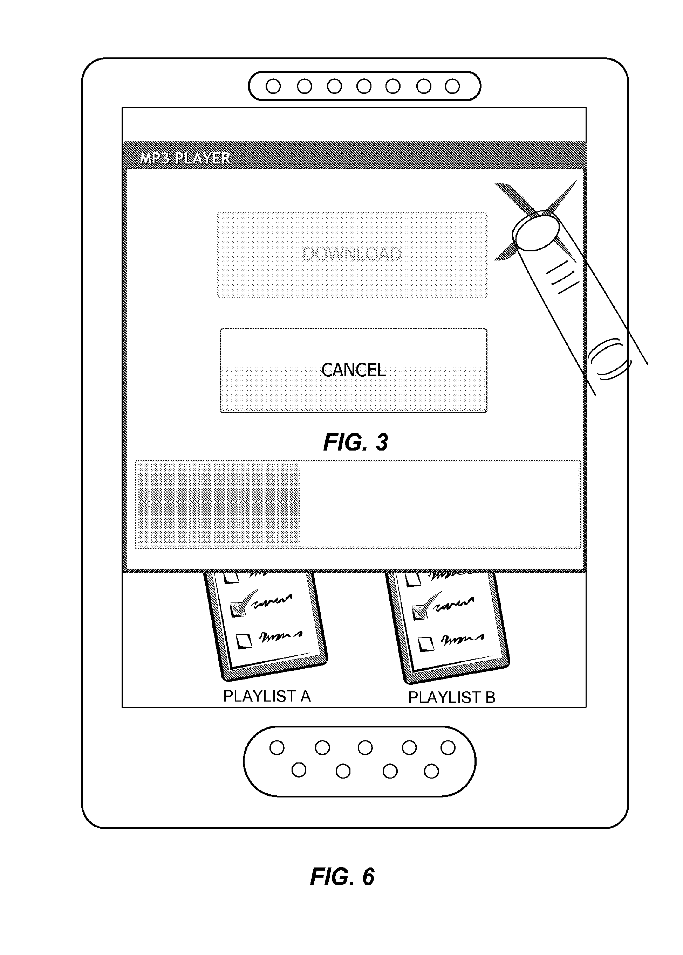

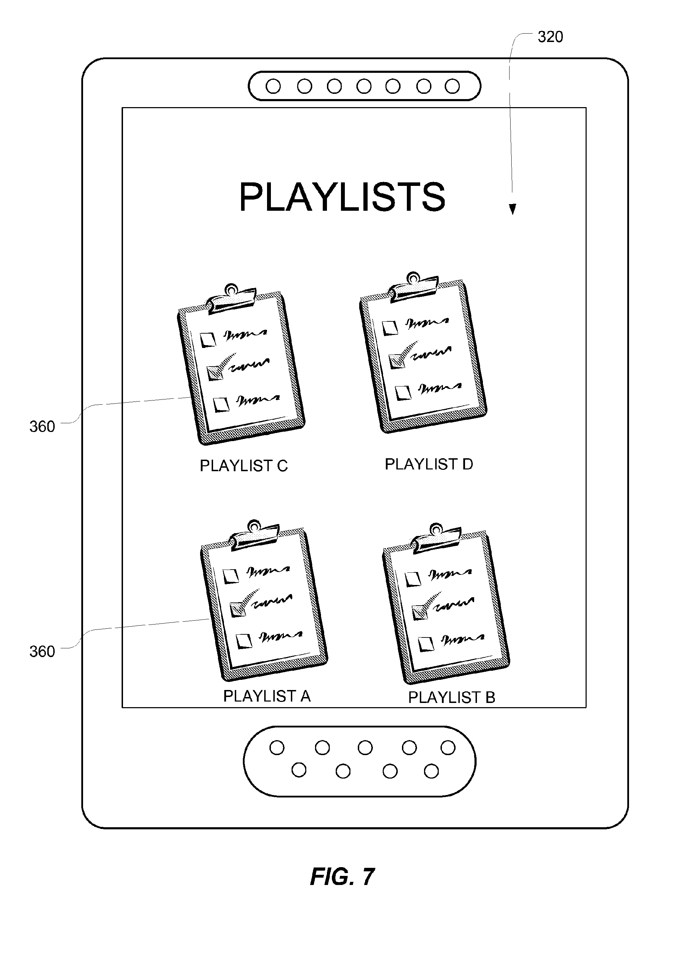

FIG. 6 is a schematic depiction of the touch-screen device 100 of FIG. 3, showing how the user then taps the X icon (the soft escape key 350) in order to cause the application to close. Once the MP3 application has closed, the underlying application becomes visible, as is known in the art of graphical user interfaces. As shown in FIG. 7, after the MP3 application 300 has closed, the underlying playlist application 310 is still open showing a plurality of application input elements 360 (in this case the playlist icons). All the area outside these icons 360 constitutes the backdrop 320 which can be touched to trigger the appearance of another soft escape key.

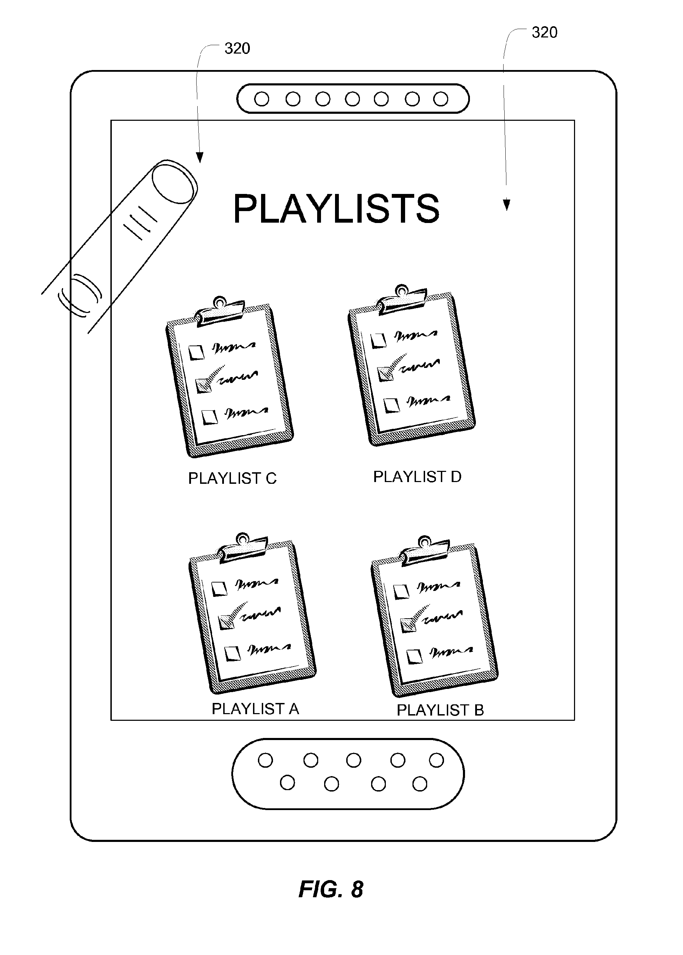

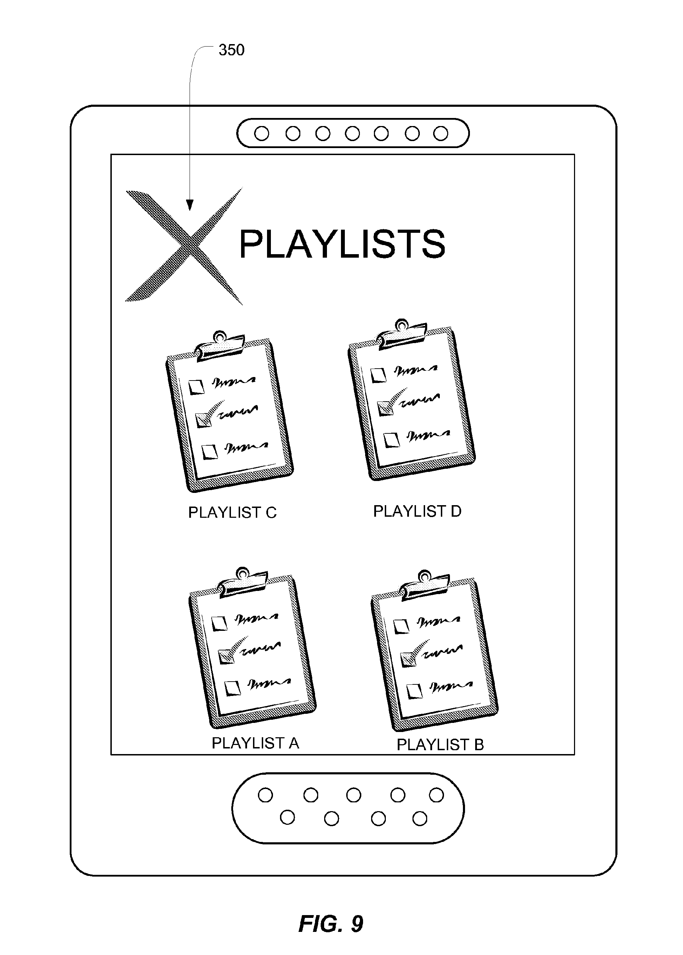

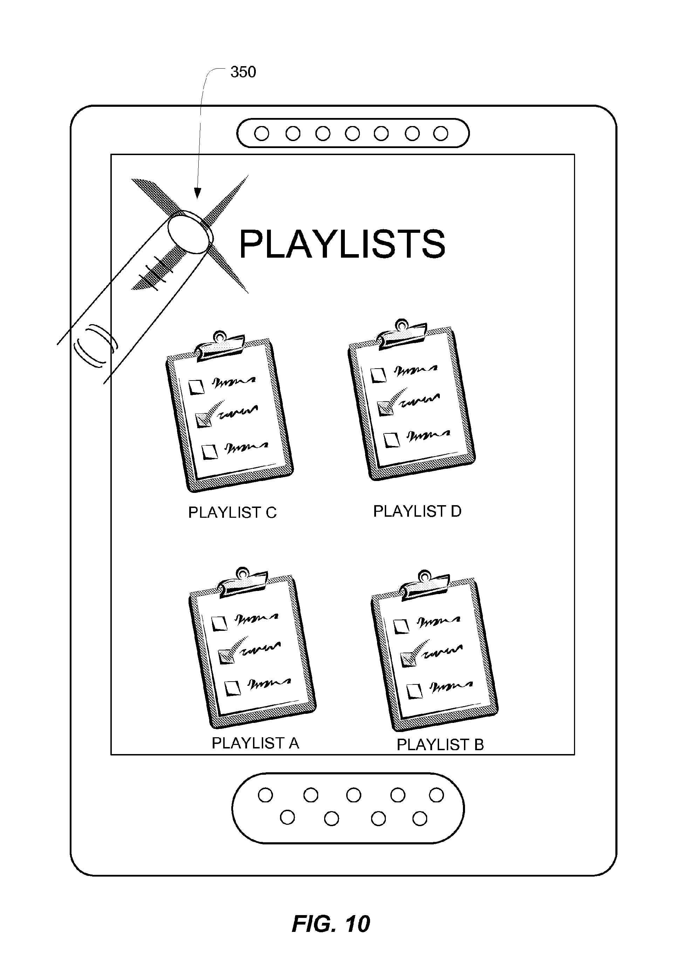

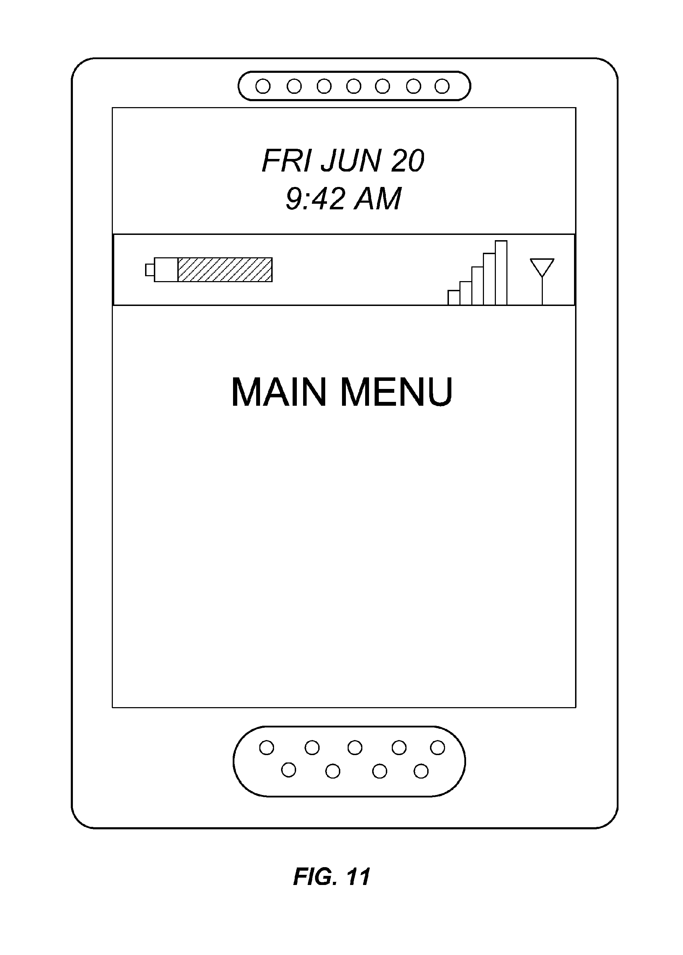

For the sake of further illustration, FIG. 8 schematically depicts how the user can again touch the backdrop 320 of the touch-sensitive screen 150 to provoke the appearance of another soft escape key 350. FIG. 9 schematically depicts how another soft escape key 350 (represented, for example, by the X icon) is displayed on the screen. In FIG. 10, the user is shown tapping (or touching) the soft escape key 350 to trigger the closing from the playlist application 310 (which, in this example, causes the device to return to the main menu shown, again for illustrative purposes only, in FIG. 11.

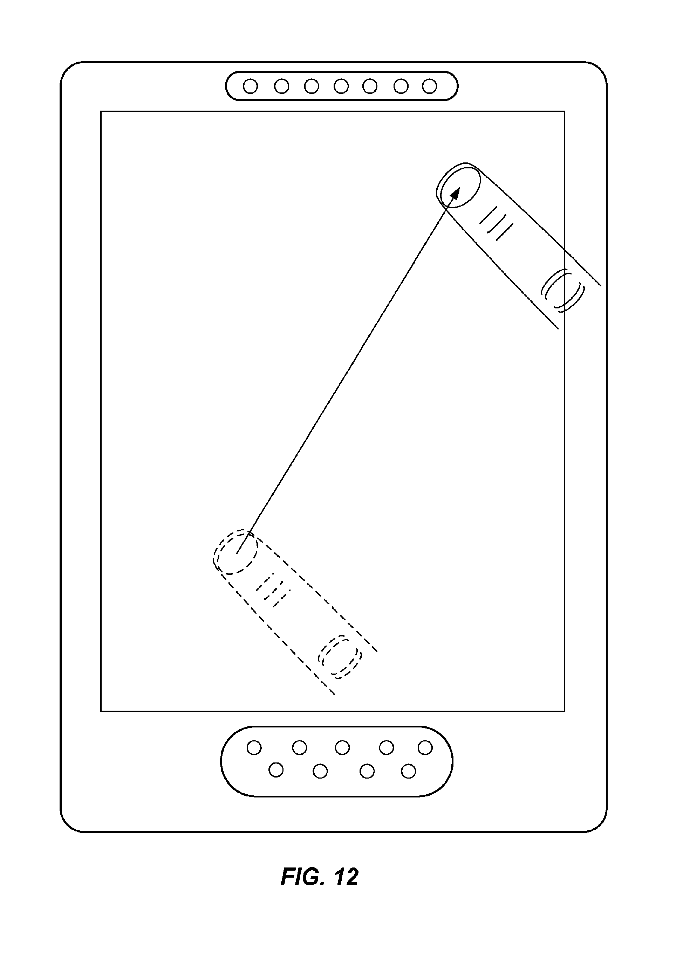

In one implementation of this technology, the step of receiving the touch input on the touch-sensitive display comprises receiving a stylus swipe that traverses a length of the touch-sensitive display exceeding a predetermined length as a precondition for triggering the step of displaying the escape icon. One example of this swiping action is the diagonal swipe shown in FIG. 12. This swiping movement can be accomplished using a finger, as shown, or using a thumb or a stylus.

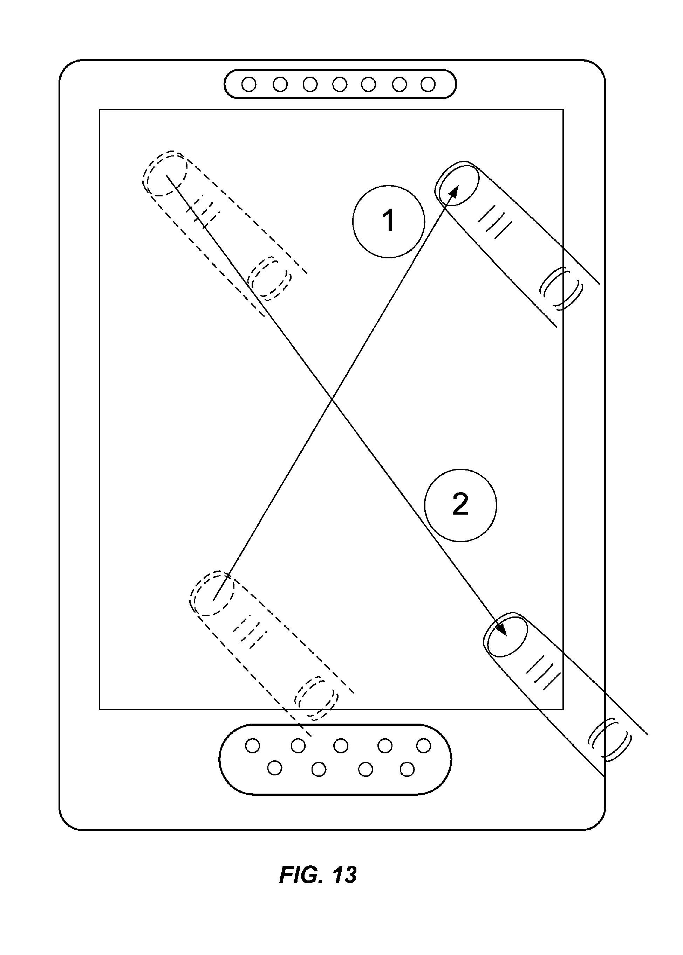

In another implementation, the step of receiving the touch input on the touch-sensitive display comprises receiving a user-predefined gesture on the screen as a precondition for triggering the step of displaying the escape icon. This user-predefined gesture can be any recognizable movement onscreen that the user wishes to record for the purposes of signalling to the device that an escape key is to be displayed. For example, this gesture can be an X or a cross traced out on the screen. FIG. 13 schematically depicts how a user can trace out an X onscreen as a customized predefined gesture that can be used to trigger the appearance of the soft escape key.

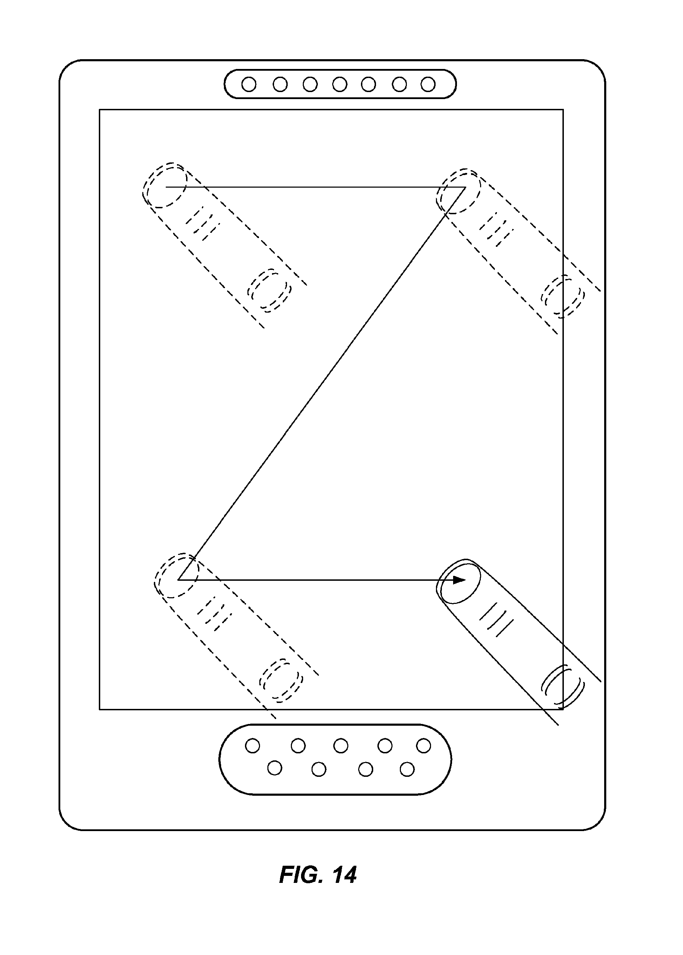

As another example, FIG. 14 schematically depicts how a user can trace out a Z onscreen as a customized predefined gesture that can be used to trigger the appearance of the soft escape key in accordance with another implementation of this technology.

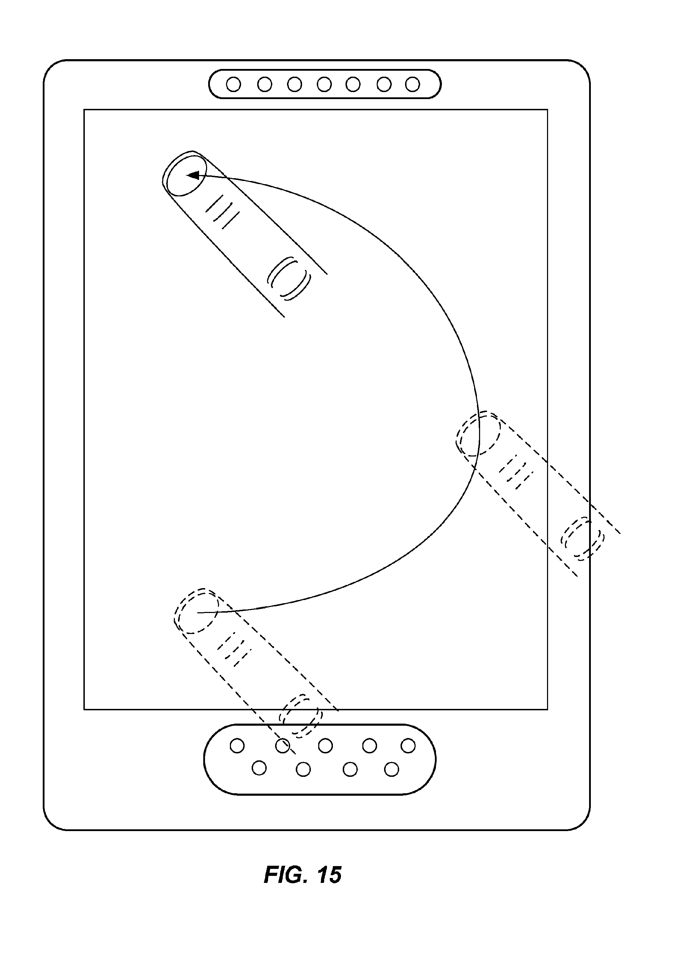

As yet a further example, FIG. 15 schematically depicts how a user can perform a circular gesture for triggering the appearance of the soft escape key in accordance with another implementation of this technology.

As another example, the gesture can involve two sequential taps (a double tap) that are very close in time. As another example, the gesture can involve touching the screen simultaneously using two fingers or thumbs.

As will be appreciated, these gestures are presented merely as examples. Any another recognizable onscreen gesture can be used to trigger the appearance onscreen of the escape key or exit button.

In the implementations described above, the soft escape key (which may also be referred to as the escape key, escape button, exit key, exit button, back key, or back button) can be used not only to close an application but also to close a window within an application for which no existing exit button is already presented onscreen.

This new technology has been described in terms of specific implementations and configurations which are intended to be exemplary only. The scope of the exclusive right sought by the Applicant is therefore intended to be limited solely by the appended claims.

## Claims

1. A method of closing an open application or window on a touch-screen device, the method comprising steps of:
receiving a touch input on a touch-sensitive display of the touch-screen device; and
in response to the touch input, displaying on the touch-sensitive display an escape icon that can be tapped to cause the device to close the open application executing on the device.

2. The method as claimed in claim 1 wherein the step of receiving the touch input comprises receiving a touch on the touch-sensitive display in a substantially fixed location on the display for a period of time that exceeds a predetermined time threshold as a precondition for triggering the step of displaying the escape icon.

3. The method as claimed in claim 1 wherein the step of receiving the touch input on the touch-sensitive display comprises receiving a stylus swipe that traverses a length of the touch-sensitive display exceeding a predetermined length as a precondition for triggering the step of displaying the escape icon.

4. The method as claimed in claim 1 wherein the step of receiving the touch input on the touch-sensitive display comprises receiving a user-predefined gesture on the screen as a precondition for triggering the step of displaying the escape icon.

5. The method as claimed in any preceding claim further comprising a step of causing the escape key to disappear after a predetermined period of time has elapsed without the escape key being touched.

6. A computer program product comprising code which when loaded into memory and executed on a processor of a handheld electronic device enables the device to perform steps of:
receiving a touch input on a touch-sensitive display of the touch-screen device; and
in response to the touch input, displaying on the touch-sensitive display an escape icon that can be tapped to cause the device to close the open application executing on the device.

7. The computer program product as claimed in claim 6 wherein the code for performing the step of receiving the touch input comprises code for processing data from a step of receiving a touch on the touch-sensitive display in a substantially fixed location on the display for a period of time that exceeds a predetermined time threshold as a precondition for triggering the step of displaying the escape icon.

8. The computer program product as claimed in claim 6 wherein the code for performing the step of receiving the touch input on the touch-sensitive display comprises code for processing data from a step of receiving a stylus swipe that traverses a length of the touch-sensitive display exceeding a predetermined length as a precondition for triggering the step of displaying the escape icon.

9. The computer program product as claimed in claim 6 wherein the code for performing the step of receiving the touch input on the touch-sensitive display comprises code for processing data from a step of receiving a user-predefined gesture on the screen as a precondition for triggering the step of displaying the escape icon.

10. The computer program product as claimed in any of claims 6 to 9 further comprising code to automatically cause the escape key to disappear if a predetermined period of time has elapsed without the escape key being touched.

11. A touch-screen device comprising:
a processor operatively coupled to a memory for storing and executing an application; and
a touch-sensitive display screen for receiving a touch input for triggering a displaying of an escape key on the display screen.

12. The device as claimed in claim 11 wherein the escape key is displayed only after the touch-sensitive display screen has been touched for a period of time exceeding a predetermined time threshold.

13. The device as claimed in claim 11 wherein the escape key is displayed only after the touch-sensitive display screen has been touched by swiping a stylus across a portion of the screen that exceeds a predetermined threshold.

14. The device as claimed in claim 11 wherein the escape key is displayed only after the touch-sensitive display screen has been touched by applying a predefined customized gesture to the screen.

15. The device as claimed in any of claims 11 to 14 wherein the escape key disappears after a predetermined period of time has elapsed representing a time window for exiting the application.

## Amended claims

### Amended claims in accordance with Rule 137(2) EPC.

**1.** A method of closing an open application or window on a touch-screen device (100), the method comprising steps of:
receiving (210) a touch input on a touch-sensitive display (150) of the touch-screen device (100);
determining if the touch input is on an application input element or on a backdrop of the display; and
in response to the touch input on the backdrop of the display, displaying (230) on the touch-sensitive display (150) an escape icon that can be tapped to cause the device to close the open application executing on the device.

**2.** The method as claimed in claim 1 wherein the step of receiving (210) the touch input comprises receiving a touch on the backdrop of the touch-sensitive display in a substantially fixed location on the display for a period of time that exceeds a predetermined temporal threshold as a precondition for triggering the step of displaying the escape icon.

**3.** The method as claimed in claim 1 wherein the step of receiving (210) the touch input on the touch-sensitive display comprises receiving a stylus swipe that traverses a length of the touch-sensitive display exceeding a predetermined length as a precondition for triggering the step of displaying the escape icon.

**4.** The method as claimed in claim 1 wherein the step of receiving (210) the touch input on the touch-sensitive display comprises receiving a user-predefined gesture on the screen as a precondition for triggering the step of displaying the escape icon.

**5.** The method as claimed in any preceding claim further comprising a step of causing the escape key (350) to disappear after a predetermined period of time has elapsed without the escape key being touched.

**6.** A computer program product comprising code which when loaded into memory (120, 130) and executed on a processor (120) of a handheld electronic device (100) enables the device to perform steps of:
receiving (210) a touch input on a touch-sensitive display (150) of the touch-screen device (100);
determining if the touch input is on an application input element or on a backdrop of the display; and
in response to the touch input on the backdrop of the display, displaying (230) on the touch-sensitive display an escape icon (350) that can be tapped to cause the device (100) to close the open application executing on the device.

**7.** The computer program product as claimed in claim 6 wherein the code for performing the step of receiving (210) the touch input comprises code for processing data from a step of receiving a touch on the touch-sensitive display in a substantially fixed location on the display for a period of time that exceeds a predetermined temporal threshold as a precondition for triggering the step of displaying the escape icon.

**8.** The computer program product as claimed in claim 6 wherein the code for performing the step of receiving (210) the touch input on the touch-sensitive display comprises code for processing data from a step of receiving a stylus swipe that traverses a length of the touch-sensitive display exceeding a predetermined length as a precondition for triggering the step of displaying the escape icon.

**9.** The computer program product as claimed in claim 6 wherein the code for performing the step of receiving (210) the touch input on the touch-sensitive display comprises code for processing data from a step of receiving a user-predefined gesture on the screen as a precondition for triggering the step of displaying the escape icon.

**10.** The computer program product as claimed in any of claims 6 to 9 further comprising code to automatically cause the escape key (350) to disappear if a predetermined period of time has elapsed without the escape key being touched.

**11.** A touch-screen device (100) comprising:
a processor (110) operatively coupled to a memory (120,130) for storing and executing an application; and
a touch-sensitive display screen (150) for receiving a touch input for triggering a displaying of an escape key (350) on the display screen, wherein the display presents application input elements and a backdrop and wherein the displaying of the escape key is only triggered when the touch input is on the backdrop.

**12.** The device as claimed in claim 11 wherein the escape key is displayed only after the touch-sensitive display screen has been touched for a period of time exceeding a predetermined time threshold.

**13.** The device as claimed in claim 11 wherein the escape key (350) is displayed only after the touch-sensitive display screen (150) has been touched by swiping a stylus across a portion of the screen that exceeds a predetermined threshold.

**14.** The device as claimed in claim 11 wherein the escape key (350) is displayed only after the touch-sensitive display screen (150) has been touched by applying a predefined customized gesture to the screen.

**15.** The device as claimed in any of claims 11 to 14 wherein the escape key (350) disappears after a predetermined period of time has elapsed representing a time window for exiting the application.
